# EUROPEAN PATENT APPLICATION

(11) **EP 4 002 246 A1**
(43) Date of publication of application: **25.05.2022**
(21) Application number: 21195893.9
(22) Date of filing: 10.09.2021
(51) Int. Cl.: G06Q 20/18, G06Q 20/20, G06Q 20/32, G07G 1/00, G07G 1/01, G07G 1/14, G06Q 20/40, B62B 5/00

(54) **INFORMATION PROCESSING DEVICE, CONTROL PROGRAM THEREFOR, AND INFORMATION PROCESSING METHOD**

(30) Priority: 17.11.2020 JP 2020191129
(71) Applicant: Toshiba TEC Kabushiki Kaisha, Tokyo 141-8562 (JP)
(72) Inventor: Tanaka, Hironori, Shinagawa-ku, Tokyo 141-8562 (JP)
(74) Representative: Bandpay & Greuter

(57) **Abstract**

An objective is to provide an information processing device, a control program therefor, and an information processing method that facilitate proper measures for a left-behind information terminal. An information processing device (a) acquires identification information identifying an information terminal operated by a user to register merchandise that the user intends to purchase, (b) in response to a determination that an operation input has not been performed at the information terminal for a threshold period of time, confirms a status of a payment for the merchandise to be purchased, the status being registered in correlation with the identification information, and (c) provides an output based on the status of the payment for the merchandise.

## Description

### FIELD

Embodiments described herein relate generally to an information processing device, a control program therefor, and an information processing method.

### BACKGROUND

Recently, a cart point of sales (POS) system has been proposed for retail stores equipped with shopping carts. In this system, an information terminal having a touch panel, a scanner or the like is provided on a shopping cart. When placing merchandise to be purchased into the shopping cart, a customer using the shopping cart uses the scanner to scan an identification code of the merchandise to be purchased and thus registers the merchandise. Data of the merchandise registered by the information terminal is sent to a payment machine. The payment machine executes a payment process based on the data from the information terminal. In this way, the cart POS system is advantageous in being able to save the time and effort of store staff to register the merchandise, since the customer registers the merchandise while shopping.

However, in this type of cart POS system, when the customer moves away leaving behind the shopping cart in the selling area, the checkout area or the like, the information terminal cannot detect that the shopping cart is left behind. Therefore, the shopping cart is left in that state until a member of the store staff finds the shopping cart. This causes various problems, for example, the next customer to use the shopping cart cannot use the shopping cart, or payment fraud by the customer is left unnoticed. Measures to cope with such leaving behind are demanded.

### DESCRIPTION OF THE DRAWINGS

FIG. 1 shows an overall configuration of a cart POS system according to an embodiment.
FIG. 2 is a block diagram showing a main circuit configuration of an information terminal.
FIG. 3 is a block diagram showing a main circuit configuration of a mobile controller.
FIG. 4 is a schematic view showing an example of a merchandise-to-be-purchased list.
FIG. 5 is a schematic view showing an example of a state table.
FIG. 6 is a block diagram showing a main circuit configuration of a store server.
FIG. 7 is a block diagram showing a main circuit configuration of a payment machine.
FIG. 8 is a flowchart showing a main control procedure of a processor in the information terminal.
FIG. 9 is a flowchart showing the main control procedure.
FIG. 10 is a flowchart showing the main control procedure.
FIG. 11 is a flowchart showing a main control procedure of a processor in the mobile controller.
FIG. 12 is a flowchart showing the main control procedure.
FIG. 13 is a flowchart showing the main control procedure.
FIG. 14 is a flowchart showing the main control procedure.
FIG. 15 is a flowchart showing a main control procedure of a processor in the payment machine.
FIG. 16 is a schematic view showing an example of a payment guide screen.
FIG. 17 is a schematic view showing an example of a monitoring screen.

### DETAILED DESCRIPTION

The invention is defined by the appended claims.

An embodiment described herein is to provide an information processing device, a control program therefor, and an information processing method that enable proper measures for a left-behind information terminal.

In general, according to one embodiment, an information processing device includes processing circuitry having programmed instructions to (a) acquire identification information identifying an information terminal operated by a user to register merchandise that the user intends to purchase, (b) in response to a determination that an operation input has not been performed at the information terminal for a threshold period of time, confirm a status of a payment for the merchandise to be purchased, the status being registered in correlation with the identification information, and (c) provide an output based on the status of the payment for the merchandise.

An embodiment of an information processing device that enables proper measures for a left-behind information terminal will now be described with reference to the drawings. In this embodiment, a tablet terminal (i.e., a cart terminal) attached to a shopping cart as a cart POS system is used as an information terminal.

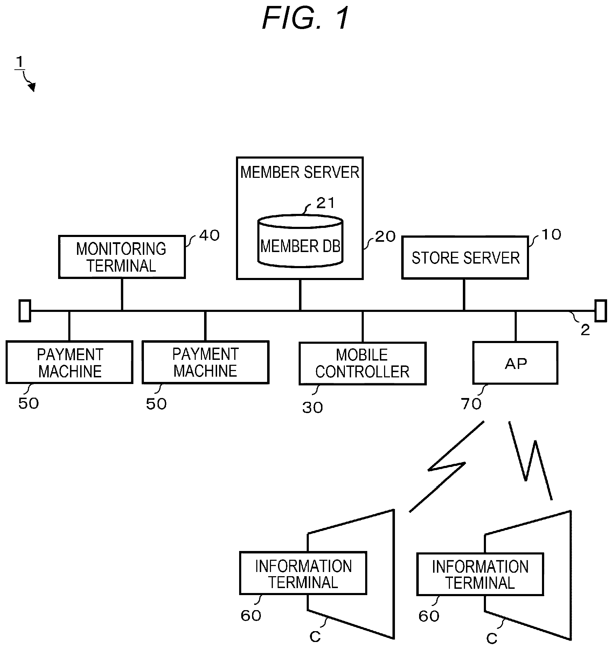

FIG. 1 shows an overall configuration of a cart POS system 1 according to this embodiment. The cart POS system 1 includes a store server 10, a member server 20, a mobile controller 30, a monitoring terminal 40, a payment machine 50, an information terminal 60, and an access point 70 as shown in FIG. 1. The store server 10, the member server 20, the mobile controller 30, the monitoring terminal 40, the payment machine 50, and the access point 70 are connected to a network 2 such as a local area network (LAN).

The information terminal 60 is a device that enables a customer, who is a purchaser, to input data about the registration of merchandise to be purchased, by self-service. The information terminal 60 is provided on a shopping cart C. Hereinafter, the shopping cart C is simply referred to as cart C. A plurality of carts C are provided with corresponding information terminals 60, respectively. The cart C is an example of a carrier that carries merchandise to be purchased by the customer who is the user of this cart C.

The information terminal 60 has a wireless unit. The information terminal 60 wirelessly communicates with the access point 70. The access point 70 relays communication between the devices connected to the network 2, that is, the store server 10, the member server 20, the mobile controller 30, the monitoring terminal 40, and the payment machine 50 on one hand, and the information terminal 60 on the other. Although only one access point 70 is shown in FIG. 1, two or more may be installed depending on the scale or the like of the store.

The payment machine 50 is a device that enables the store staff or the customer to perform a payment for the merchandise to be purchased. The number of payment machines 50 is not particularly limited.

The store server 10 supports store operation. For this support, the store server 10 manages a merchandise database, a sales database, and the like. In the merchandise database, a merchandise record describing merchandise data on a per merchandise item basis to be sold at the store is saved. The merchandise data includes a merchandise code, a merchandise name, a price, and the like. The merchandise code is an identification of the merchandise. In the sales database, a sales record describing sales data on a per item basis including merchandise item, category, time bracket, day, week, month, and the like is saved. The sales data includes the number of merchandise items sold, the amount of sales, and the like.

The member server 20 supports the purchase operation by a customer who has registered as a member (i.e., a member). For this support, the member server 20 manages a member database 21. In the member database 21, a member record describing member data on a per member basis is saved. The member data includes a member ID, a name, a gender, an email address, and the like. The member ID is an identification code of the member.

The mobile controller 30 cooperates with the information terminal 60 and thus gives support in such a way that the information terminal 60 acts as a POS terminal.

The monitoring terminal 40 is a monitoring terminal provided at an attendant desk where a monitoring staff member who is a store staff member (i.e., an attendant) is stationed at all times. The monitoring terminal 40 has a display device (e.g., a display) for displaying the state of each information terminal 60 and each payment machine 50. The attendant monitors the state of each information terminal 60 and each payment machine 50 in real time, based on information displayed on the display device.

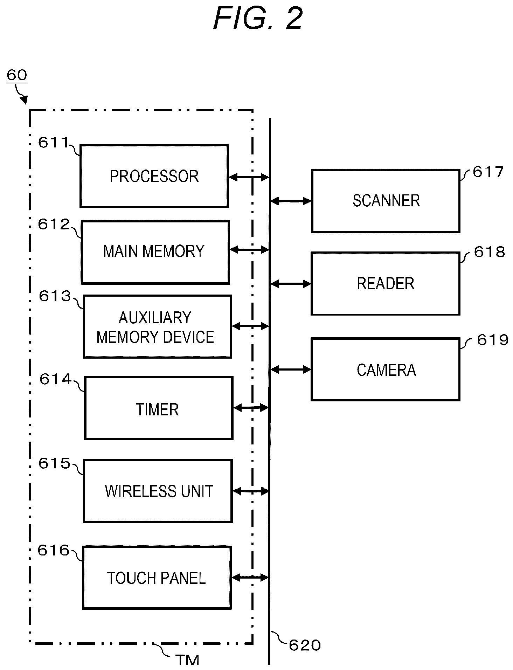

FIG. 2 is a block diagram showing a main circuit configuration of the information terminal 60. The information terminal 60 has a processor 611, a main memory 612, an auxiliary memory device 613, a timer 614, a wireless unit 615, a touch panel 616, a scanner 617, a reader 618, a camera 619, and a system transmission line 620. The system transmission line 620 includes an address bus, a data bus, a control signal line, or the like. In the information terminal 60, the processor 611, the main memory 612, the auxiliary memory device 613, the timer 614, the wireless unit 615, the touch panel 616, the scanner 617, the reader 618, and the camera 619 are connected to the system transmission line 620. In the information terminal 60, the processor 611, the main memory 612, the auxiliary memory device 613, and the system transmission line 620 connecting these components, together form a computer (e.g., a controller).

The processor 611 is equivalent to a central part of the computer. The processor 611 controls each part in order to implement various functions of the information terminal 60, based on an operating system or an application program. The processor 611 is, for example, a central processing unit (CPU).

The main memory 612 is equivalent to a main memory part of the computer. The main memory 612 includes a non-volatile memory area and a volatile memory area. The main memory 612 stores an operating system or an application program in the non-volatile memory area. The main memory 612 may store necessary data for the processor 611 to execute a processing to control each part, in the non-volatile or volatile memory area. The main memory 612 uses the volatile memory area as a work area where the processor 611 rewrites data according to need. The non-volatile memory area is, for example, a read-only memory (ROM). The volatile memory area is, for example, a random-access memory (RAM).

The auxiliary memory device 613 is equivalent to an auxiliary memory part of the computer. For example, an electrically erasable programmable read-only memory (EEPROM) (trademark registered), a hard disk drive (HDD), or a solid-state drive (SSD) or the like can be the auxiliary memory device 613. In the auxiliary memory device 613, data used by the processor 611 to perform various processes, or data generated as a result of a processing by the processor 611, or the like, is saved. The auxiliary memory device 613 may store the foregoing application program.

The timer 614 tracks a set time under the control of the processor 611. The wireless unit 615 (e.g., a communication interface) wirelessly communicates data with the access point 70 according to a wireless communication protocol.

The touch panel 616 (e.g., a user interface, an operator interface, etc.) is a device having both an input device and a display device of the information terminal 60. The touch panel 616 detects a touch position on a displayed image and outputs touch position information thereof to the processor 611.

The scanner 617 reads a code symbol such as a barcode or a two-dimensional code attached to a merchandise item. A merchandise item is provided with a code symbol representing a merchandise code thereof. The scanner 617 outputs the code symbol thus read to the processor 611. The scanner 617 may be of a type that reads a code symbol by scanning with a laser beam or a type that reads a code symbol from an image picked up by an image pickup device (e.g., a camera).

The reader 618 reads data recorded on a recording medium and outputs the data thus read to the processor 611. If the recording medium is a magnetic card, the reader 618 is a magnetic card reader. If the recording medium is a contact integrated circuit (IC) card, the reader 618 is an IC card reader. If the recording medium uses radio-frequency identification (RFID), like a contactless IC card or a smartphone, an RFID reader is used as the reader 618.

The camera 619 is provided on the cart C in such a way as to be able to capture, from above, an image of a shopping basket placed in a basket holder part of the cart C. The camera 619 is for monitoring whether or not a customer who is the user of the cart C correctly places merchandise to be purchased in the shopping basket.

In the information terminal 60 having the circuit components as described above, the processor 611, the main memory 612, the auxiliary memory device 613, the timer 614, the wireless unit 615, and the touch panel 616 are formed by a tablet terminal TM (e.g., a user interface). The information terminal 60 is formed by electrically connecting the scanner 617, the reader 618, and the camera 619 to the tablet terminal TM.

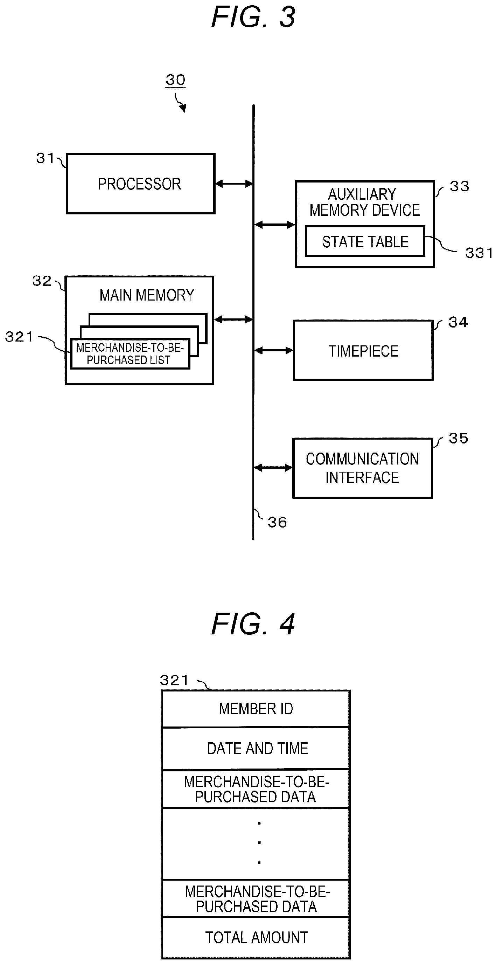

FIG. 3 is a block diagram showing a main circuit configuration of the mobile controller 30. The mobile controller 30 has a processor 31, a main memory 32, an auxiliary memory device 33, a timepiece 34 (e.g., a clock, a timekeeper), a communication interface 35, and a system transmission line 36. The system transmission line 36 includes an address bus, a data bus, a control signal line, or the like. In the mobile controller 30, the processor 31, the main memory 32, the auxiliary memory device 33, the timepiece 34, and the communication interface 35 are connected to the system transmission line 36. In the mobile controller 30, the processor 31, the main memory 32, the auxiliary memory device 33, and the system transmission line 36 connecting these components, together form a computer.

The processor 31 is equivalent to a central part of the computer. The processor 31 controls each part in order to implement various functions of the mobile controller 30, based on an operating system or an application program. The processor 31 is, for example, a CPU.

The main memory 32 is equivalent to a main memory part of the computer. The main memory 32 includes a non-volatile memory area and a volatile memory area. The main memory 32 stores an operating system or an application program in the non-volatile memory area. The main memory 32 may store necessary data for the processor 31 to execute a processing to control each part, in the non-volatile or volatile memory area. The main memory 32 uses the volatile memory area as a work area where the processor 31 rewrites data according to need. The non-volatile memory area is, for example, a ROM. The volatile memory area is, for example, a RAM

The auxiliary memory device 33 is equivalent to an auxiliary memory part of the computer. For example, an EEPROM, an HDD, or an SSD or the like can be the auxiliary memory device 33. In the auxiliary memory device 33, data used by the processor 31 to perform various kinds of processings, or data generated as a result of a processing by the processor 31, or the like, is saved. The auxiliary memory device 33 may store the foregoing application program.

The timepiece 34 functions as a time information source for the mobile controller 30. The processor 31 tracks the current date and time, based on time information tracked by the timepiece 34.

The communication interface 35 is connected to the network 2. The communication interface 35 communicates data with another device connected via the network 2 according to a communication protocol.

In the mobile controller 30 having such a configuration, a part of the volatile memory area of the main memory 32 is used as an area for generating a merchandise-to-be-purchased list 321. The mobile controller 30 can generate a plurality of merchandise-to-be-purchased lists 321 (see FIG. 4) in this area.

FIG. 4 is a schematic view showing an example of the merchandise-to-be-purchased list 321. As shown in FIG. 4, the merchandise-to-be-purchased list 321 has areas for storing a member ID, date and time, one or a plurality of merchandise-to-be-purchased data, and a total amount, respectively. The date and time is the date and time as of when the merchandise-to-be-purchased list 321 is generated by the mobile controller 30. The merchandise-to-be-purchased data is formed of a merchandise code of merchandise-to-be-purchased which is to be purchased by a customer, a merchandise name, a number of merchandise items to be purchased, and an amount of purchase, or the like. The number of merchandise items to be purchased is the number of items to be purchased of the merchandise identified by this merchandise code. The amount of the purchase (e.g., the total cost) is the total of prices based on the number of merchandise items to be purchased. The total amount is the total of the amounts of purchase (e.g., the cost of the individual merchandise items to be purchased) included in the merchandise-to-be-purchased data.

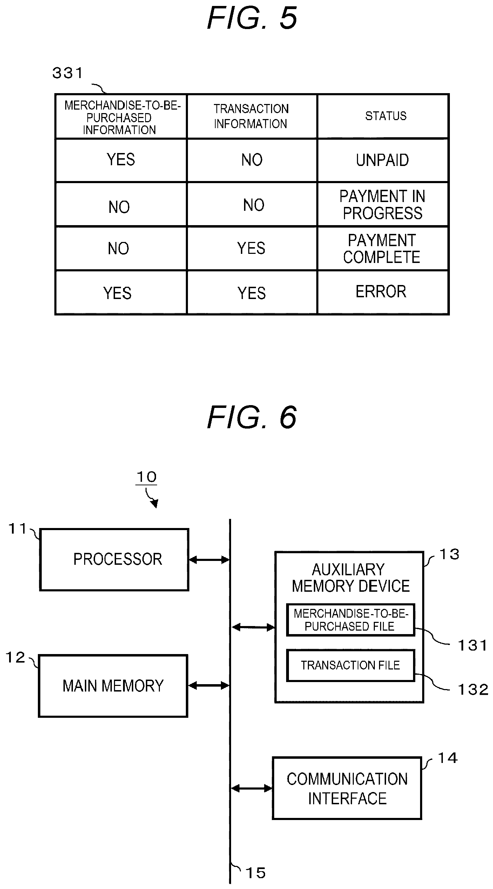

The description goes back to FIG. 3. In the mobile controller 30 having such a configuration, the auxiliary memory device 33 stores a state table 331 (see FIG. 5).

FIG. 5 is a schematic view showing an example of the state table 331. As shown in FIG. 5, the state table 331 is a data table including merchandise-to-be-purchased information, transaction information, and status. The merchandise-to-be-purchased information represents whether a merchandise-to-be-purchased file, described later, exists in the store server 10 or not. If the merchandise-to-be-purchased file exists, "YES" is given. If the merchandise-to-be-purchased file does not exist, "NO" is given. The transaction information represents whether a transaction file, described later, exists in the store server 10 or not. If the transaction file exists, "YES" is given. If the transaction file does not exist, "NO" is given. The status is information representing the status of the payment of merchandise-to-be-purchased identified by the merchandise-to-be-purchased information and the transaction information, that is, the payment status. The status can be "unpaid", "payment in progress", "payment complete", and "error". "Unpaid" is a status where the payment processing for merchandise-to-be-purchased is not complete. "Payment in progress" is a status until the payment processing is completed after the payment processing is approved. "Payment complete" is a status where the payment processing for merchandise-to-be-purchased is complete. "Error" refers to an abnormal state of the cart POS system 1. In this embodiment, when the merchandise-to-be-purchased information is "YES" and the transaction information is "NO", the status is "unpaid". When the merchandise-to-be-purchased information is "NO" and the transaction information is "NO", the status is "payment in progress". When the merchandise-to-be-purchased information is "NO" and the transaction information is "YES", the status is "payment complete". When the merchandise-to-be-purchased information is "YES" and the transaction information is "YES", the status is "error". The status is not limited to "unpaid", "payment in progress", "payment complete", and "error". Items that can be included in the state table 331 are not limited the above items.

FIG. 6 is a block diagram showing a main circuit configuration of the store server 10. The store server 10 has a processor 11, a main memory 12, an auxiliary memory device 13, a communication interface 14, and a system transmission line 15. The system transmission line 15 includes an address bus, a data bus, a control signal line, or the like. In the store server 10, the processor 11, the main memory 12, the auxiliary memory device 13, and the communication interface 14 are connected to the system transmission line 15. In the store server 10, the processor 11, the main memory 12, the auxiliary memory device 13, and the system transmission line 15 connecting these components, together form a computer (e.g., a controller).

The processor 11 is equivalent to a central part of the computer. The processor 11 controls each part in order to implement various functions of the store server 10, based on an operating system or an application program. The processor 11 is, for example, a CPU.

The main memory 12 is equivalent to a main memory part of the computer. The main memory 12 includes a non-volatile memory area and a volatile memory area. The main memory 12 stores an operating system or an application program in the non-volatile memory area. The main memory 12 may store necessary data for the processor 11 to execute a processing to control each part, in the non-volatile or volatile memory area. The main memory 12 uses the volatile memory area as a work area where the processor 11 rewrites data according to need. The non-volatile memory area is, for example, a ROM. The volatile memory area is, for example, a RAM

The auxiliary memory device 13 is equivalent to an auxiliary memory part of the computer. For example, an EEPROM, an HDD, or an SSD or the like can be the auxiliary memory device 13. In the auxiliary memory device 13, data used by the processor 11 to perform various kinds of processings, or data generated as a result of a processing by the processor 11, or the like, is saved. The auxiliary memory device 13 may store the foregoing application program.

The communication interface 14 is connected to the network 2. The communication interface 14 communicates data with another device connected via the network 2 according to a communication protocol.

In the store server 10 having such a configuration, a merchandise-to-be-purchased file 131 and a transaction file 132 are saved in the auxiliary memory device 13. The merchandise-to-be-purchased file 131 stores the merchandise-to-be-purchased list 321 and a payment barcode on a per customer basis. The payment barcode will be described later. The transaction file 132 stores the merchandise-to-be-purchased list 321, the payment barcode, and transaction data on a per customer basis. The transaction data includes data representing the content of a transaction and the result of payment or the like. The transaction data is, for example, an amount paid, an amount of coins, a type of settlement (e.g., cash, credit card, points, cash voucher or the like).

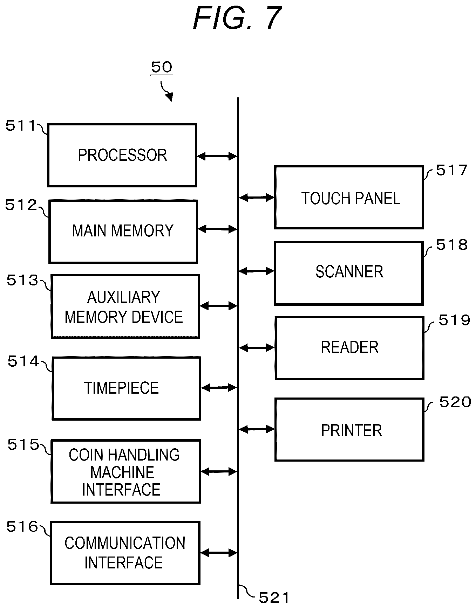

FIG. 7 is a block diagram showing a main circuit configuration of the payment machine 50. The payment machine 50 has a processor 511, a main memory 512, an auxiliary memory device 513, a timepiece 514, a coin handling machine interface 515, a communication interface 516, a touch panel 517, a scanner 518, a reader 519, a printer 520, and a system transmission line 521. The system transmission line 521 includes an address bus, a data bus, a control signal line, or the like. The system transmission line 521 connects the processor 511, the main memory 512, the auxiliary memory device 513, the timepiece 514 (e.g., a clock, a timekeeper, etc.), the coin handling machine interface 515, the communication interface 516, the touch panel 517, the scanner 518, the reader 519, and the printer 520 to each other. The processor 511, the main memory 512, and the auxiliary memory device 513 are connected together via the system transmission line 521, thus forming a computer of the payment machine 50.

The processor 511 is equivalent to a central part of the computer. The processor 511 controls each part in order to implement various functions of the payment machine 50, based on an operating system or an application program. The processor 511 is, for example, a CPU.

The main memory 512 is equivalent to a main memory part of the computer. The main memory 512 includes a non-volatile memory area and a volatile memory area. The main memory 512 stores an operating system or an application program in the non-volatile memory area. The main memory 512 may store necessary data for the processor 511 to execute a processing to control each part, in the non-volatile or volatile memory area. The main memory 512 uses the volatile memory area as a work area where the processor 511 rewrites data according to need. The non-volatile memory area is, for example, a ROM. The volatile memory area is, for example, a RAM

The auxiliary memory device 513 is equivalent to an auxiliary memory part of the computer. For example, an EEPROM, an HDD, or an SSD or the like can be the auxiliary memory device 513. In the auxiliary memory device 513, data used by the processor 511 to perform various kinds of processings, or data generated as a result of a processing by the processor 511, or the like, is saved. The auxiliary memory device 513 may store the foregoing application program.

The application program stored in the main memory 512 or the auxiliary memory device 513 includes a control program describing an information processing executed by the payment machine 50. The method for installing the control program in the main memory 512 or the auxiliary memory device 513 is not particularly limited. The control program may be recorded in a removable recording medium or may be distributed by communication via a network and thus can be installed in the main memory 512 or the auxiliary memory device 513. The recording medium may be any form of recording medium that can store a program and can be read by a device, such as a CD-ROM or a memory card.

The timepiece 514 functions as a time information source for the payment machine 50. The processor 511 tracks the current date and time, based on time information tracked by the timepiece 514.

The coin handling machine interface 515 communicates data with an automatic coin handling machine (e.g., a physical currency counter). The coin handling machine interface 515 receives data of the amount entered, data of the number of coins accommodated, and the like, from the automatic coin handling machine. The coin handling machine interface 515 transmits coin data to the automatic coin handling machine.

The communication interface 516 is connected to the network 2. The communication interface 516 communicates data with another device connected via the network 2 according to a communication protocol.

The touch panel 517 (e.g., a user interface) is a device having both an input device and a display device of the payment machine 50. The touch panel 517 detects a touch position on a displayed image and outputs touch position information thereof to the processor 511.

The scanner 518 (e.g., a code symbol scanner) is an example of a reading device (e.g., a reader) reading a code symbol such as a barcode or a two-dimensional code. The scanner 518 may be of a type that reads a code symbol by scanning with a laser beam or a type that reads a code symbol from an image picked up by an image pickup device (e.g., a camera).

The reader 519 reads data recorded on a recording medium and outputs the data thus read to the processor 511. If the recording medium is a magnetic card, the reader 519 is a magnetic card reader. If the recording medium is a contact IC card, the reader 519 is an IC card reader. If the recording medium uses an RFID, like a contactless IC card or a smartphone, an RFID reader is used as the reader 519.

The printer 520 (e.g., a receipt printer) prints various letter strings or images or the like on a receipt paper and thus dispenses a receipt. As the printer 520 of this type, for example, a thermal printer or a dot impact printer or the like can be used. The printer 520 functions as a printing device of the payment machine 50.

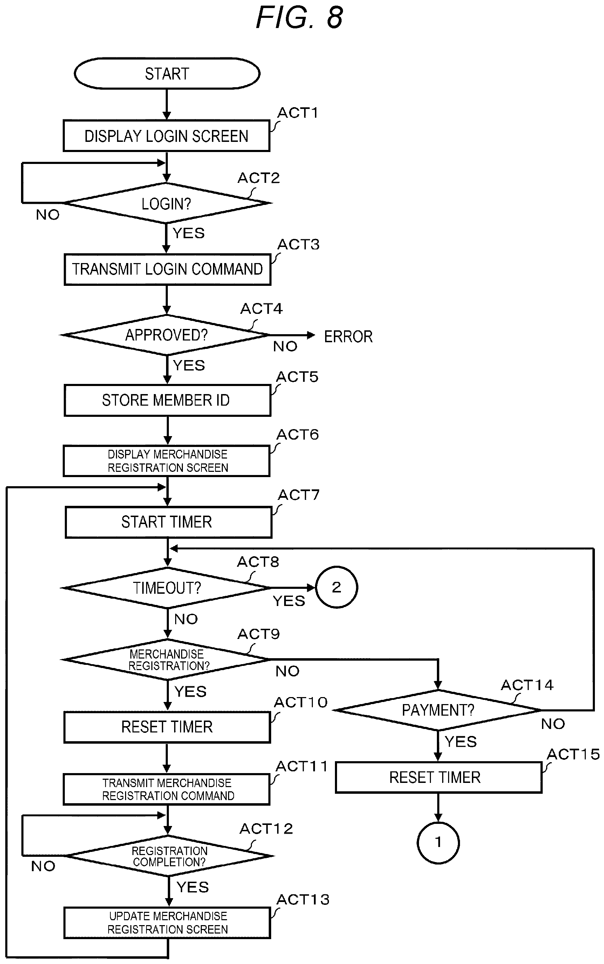

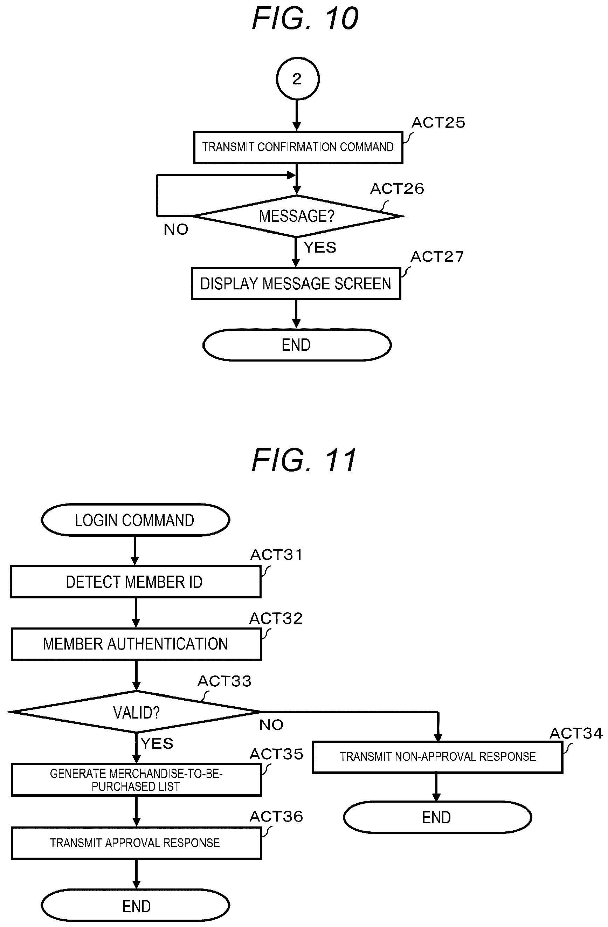

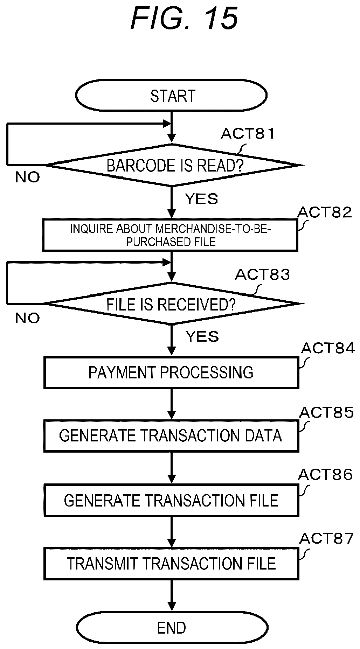

FIGS. 8 to 10 are flowcharts showing a main procedure of a principal processing executed by the processor 611 of the information terminal 60 according to a control program. The control program is stored in the main memory 612 or the auxiliary memory device 613. FIGS. 11 to 14 are flowcharts showing a main procedure of a principal processing executed by the processor 31 of the mobile controller 30 according to a control program. The control program is stored in the main memory 32 or the auxiliary memory device 33. FIG. 15 is a flowchart showing a main procedure of a principal processing executed by the processor 511 of the payment machine 50 according to a control program. The control program is stored in the main memory 512 or the auxiliary memory device 513.

Main operations of the cart POS system 1 for a member customer to register merchandise to be purchased, using the information terminal 60 provided on the cart C, and complete payment by the payment machine 50, will now be described. The operations described below are simply an example. The procedures thereof are not particularly limited, provided that similar effects are achieved.

First, a customer who shops using the cart C touches the touch panel 616. When the touch panel 616 is touched, the processor 611, which is in an idle state, then starts up. The processor 611 starts an information processing according to the procedure shown in the flowchart of FIG. 8.

In ACT 1, the processor 611 displays a login screen on the touch panel 616. The login screen is a screen for instructing a member to carry out a login operation. The member customer possesses a membership card on which the customer's own member code is recorded. On checking the login screen, the customer causes the reader 618 to read the data on the membership card. When the data on the membership card is read by the reader 618, the data on the membership card is provided to the processor 611.

After displaying the login screen, the processor 611 in ACT 2 waits for the login. When receiving data from the reader 618 and confirming that the data is the data on the membership card including the member ID, the processor 611 determines that the login is carried out. That is, the processor 611 makes a YES determination in ACT 2 and proceeds to ACT 3.

In ACT 3, the processor 611 controls the wireless unit 615 to output a login command addressed to the mobile controller 30. In response to this control, the wireless unit 615 wirelessly transmits a login command. The login command is received by the access point 70 and sent to the mobile controller 30 via the network 2. The login command includes the member ID of the membership card read by the reader 618.

On receiving a command from the information terminal 60 via the communication interface 35, the processor 31 of the mobile controller 30 checks the type of the command. If the received command is a login command, the processor 31 starts a command reception processing according to the procedure shown in the flowchart of FIG. 11.

In ACT 31, the processor 31 detects the member ID from the login command. In ACT 32, the processor 31 performs authentication of the member identified by this member ID. Specifically, the processor 31 inquires of the member server 20 about whether a member record including this member ID exists in the member database 21 or not. If the processor 31 receives a response from the member server 20 to the effect that a corresponding member record exists in the member database 21, the processor 31 recognizes that the member authentication is valid. Meanwhile, if the processor 31 receives a response from the member server 20 to the effect that a corresponding member record does not exist in the member database 21, the processor 31 recognizes that the member authentication is invalid.

After authenticating the member, the processor 31 in ACT 33 confirms the result of the authentication. If the result of the authentication is invalid, the processor 31 makes a NO determination in ACT 33 and proceeds to ACT 34. In ACT 34, the processor 31 controls the communication interface 35 to output a non-approval response command addressed to the information terminal 60. In response to this control, the communication interface 35 transmits a non-approval response command. The non-approval response command is wirelessly transmitted from the access point 70 via the network 2 and received by the information terminal 60 of the login command transmission source.

If the result of the authentication is valid, the processor 31 makes a YES determination in ACT 33 and proceeds to ACT 35. In ACT 35, the processor 31 generates the merchandise-to-be-purchased list 321 in the main memory 32. The processor 31 then writes the member ID included in the login command and the current date and time tracked by the timepiece 34, in the merchandise-to-be-purchased list 321.

In ACT 36, the processor 31 controls the communication interface 35 to output an approval response command addressed to the information terminal 60. In response to this control, the communication interface 35 transmits an approval response command. The approval response command is wirelessly transmitted from the access point 70 via the network 2 and received by the information terminal 60 of the login command transmission source.

In this way, the mobile controller 30 receiving a login command transmits a non-approval response command or an approval response command to the information terminal 60 of the transmission source of the login command. On completion of the transmission of one of the response commands, the processor 31 ends this command reception processing.

The description goes back to FIG. 8. After controlling the output of the login command in ACT 3, the processor 611 of the information terminal 60 waits for a response command from the mobile controller 30 in ACT 4. If a non-approval response command is received from the mobile controller 30, the processor 611 makes a NO determination in ACT 4 and determines the login as error.

If the login results in error, the customer who is the operator of the information terminal 60 performs an error cancellation operation via the touch panel 616. When the cancellation operation is performed, the processor 611 resumes the processing from ACT 1. Therefore, the customer is to log in again.

If an approval response command is received from the mobile controller 30, the processor 611 makes a YES determination in ACT 4 and proceeds to ACT 5. In ACT 5, the processor 611 stores the member ID included in the approval response command, in the main memory 612.

In ACT 6, the processor 611 displays a merchandise registration screen on the touch panel 616. Although not illustrated, the merchandise registration screen is a screen for displaying the merchandise-to-be-purchased data of the name, price and the like of the merchandise to be purchased by the customer, and the total amount.

After checking the merchandise registration screen, the customer goes around the selling area and places the merchandise that the customer is to purchase (i.e., merchandise to be purchased) into the cart C. For example, the customer puts the merchandise to be purchased in a shopping basket (e.g., the cart C includes the shopping basket). Before putting the merchandise to be purchased in the shopping basket, the customer operates the scanner 617 to read a code symbol attached to the merchandise. As the code symbol is read by the scanner 617, the merchandise code represented by the code symbol is inputted to the information terminal 60. That is, the merchandise identified by the merchandise code is registered.

A code symbol may not be attached to some merchandise items such as fresh food. If a code symbol is not attached to the merchandise to be purchased, the customer touches a merchandise button corresponding to the merchandise to be purchased, from among merchandise buttons displayed on the touch panel 616. As the merchandise button is touched, the merchandise code of the merchandise corresponding to this merchandise button is inputted to the information terminal 60. That is, the merchandise identified by the merchandise code is registered.

In ACT 7, the processor 611 starts the timer 614. In ACT 8, the processor 611 checks whether or not the count value of the timer 614 has passed a predetermined time (e.g., a predetermined period of time, a threshold period of time) without having an operation input to the information terminal 60. The operation input to the information terminal 60 is, for example, a touch on the touch panel 616, a code symbol being read by the scanner 617 or the like during the merchandise registration process. The predetermined time is, for example, 10 minutes, 15 minutes or the like. The predetermined time can be set to be any duration of time. If the predetermined time has passed in the processor 611 without having an operation input the information terminal 60, the customer may have moved away from the cart C, leaving the cart C behind. If the predetermined time has passed, the processor 611 makes a YES determination in ACT 8 and proceeds to ACT 25 in FIG. 10. The processing of ACT 25 will be described later.

If the predetermined time has not passed, the processor 611 makes a NO determination in ACT 8 and proceeds to ACT 9. In ACT 9, the processor 611 checks whether merchandise registration is performed or not.

If merchandise registration is performed, the processor 611 makes a YES determination in ACT 9 and proceeds to ACT 10. That merchandise registration is performed means that an operation input to the information terminal 60 is performed. In ACT 10, the processor 611 resets the timer 614.

In ACT 11, the processor 611 controls the wireless unit 615 to output a merchandise registration command addressed to the mobile controller 30. In response to this control, the wireless unit 615 wirelessly transmits a merchandise registration command. The merchandise registration command is received by the access point 70 and sent to the mobile controller 30 via the network 2. The merchandise registration command includes the member ID stored in the main memory 612 and the merchandise code of the merchandise to be purchased.

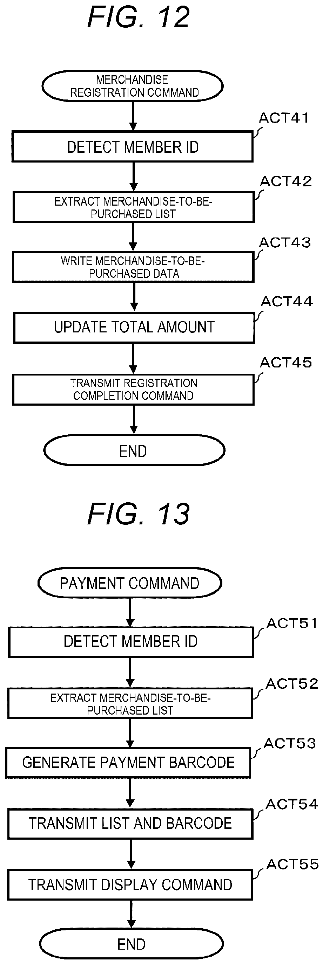

On receiving the merchandise registration command, the processor 31 of the mobile controller 30 starts a command reception processing according to the procedure shown in the flowchart of FIG. 12. In ACT 41, the processor 31 detects the member ID from the merchandise registration command. In ACT 42, the processor 31 extracts the merchandise-to-be-purchased list 321 where this member ID is described, as a processing target.

In ACT 43, the processor 31 generates merchandise-to-be-purchased data based on the merchandise code included in the merchandise registration command and writes this merchandise-to-be-purchased data in the merchandise-to-be-purchased list 321. In ACT 44, the processor 31 updates the total amount in the merchandise-to-be-purchased list 321 (e.g., the total cost of the items within the merchandise-to-be-purchased list 321) by adding the amount of purchase (e.g., the cost) of the newly written merchandise-to-be-purchased data to the total amount.

In ACT 45, the processor 31 controls the communication interface 35 to output a registration completion command addressed to the information terminal 60. In response to this control, the communication interface 35 transmits a registration completion command. The registration completion command is wirelessly transmitted from the access point 70 via the network 2 and received by the information terminal 60 of the merchandise registration command. The registration completion command includes the merchandise-to-be-purchased list 321. The processor 31 then ends the merchandise registration command reception processing.

The description returns to FIG. 8. After controlling the output of the merchandise registration command in ACT 11, the processor 611 of the information terminal 60 waits for a registration completion command in ACT 12. On receiving a registration completion command from the mobile controller 30, the processor 611 makes a YES determination in ACT 12 and proceeds to ACT 13. In ACT 13, the processor 611 updates the merchandise registration screen displayed on the touch panel 616. That is, the processor 611 updates the merchandise registration screen in such a way that the merchandise name of the merchandise registered for purchase and the amount of purchase are added and that the amount of purchase is added to the total amount, based on the merchandise-to-be-purchased list 321 included in the registration completion command. Subsequently, the processor 611 returns to ACT 7. The processor 611 executes the processing of ACT 7 to ACT 13 as in the foregoing case. Therefore, the processor 31 of the mobile controller 30, too, executes again the merchandise registration command reception processing shown in FIG. 12.

If merchandise registration is not performed, the processor 611 makes a NO determination in ACT 9 and proceeds to ACT 14. In ACT 14, the processor 611 checks whether a payment is designated or not (e.g., whether the information terminal 60 has received a command from a user to begin a payment operation (i.e., an initiate payment instruction or initiate payment command)).

An image of a payment button is displayed (e.g., by the touch panel 616) at a part of the merchandise registration screen. On finishing the shopping, the customer touches the payment button. When the payment button is touched, the processor 611 recognizes that a payment is designated. If a payment is not designated, the processor 611 makes a NO determination in ACT 14 and returns to ACT 8. Then, the processor 611 waits until merchandise registration is performed in ACT 9 or until a payment is designated in ACT 14.

If the processor 611 detects that the payment touch button is touched, the processor 611 makes a YES determination in ACT 14 and proceeds to ACT 15. That the payment touch button is touched means that an operation input to the information terminal 60 is performed. In ACT 15, the processor 611 resets the timer 614.

In ACT 16 in FIG. 11, the processor 611 controls the wireless unit 615 to output a payment command addressed to the mobile controller 30. In response to this control, the wireless unit 615 wirelessly transmits a payment command. The payment command is received by the access point 70 and sent to the mobile controller 30 via the network 2. The payment command includes the member ID stored in the main memory 612.

On receiving the payment command, the processor 31 of the mobile controller 30 starts a command reception processing according to the procedure shown in the flowchart of FIG. 13.

In ACT 51, the processor 31 detects the member ID from the payment command. In ACT 52, the processor 31 extracts the merchandise-to-be-purchased list 321 where the extracted member ID is described, as a processing target.

In ACT 53, the processor 31 generates data of a payment barcode. The payment barcode is for identifying the customer paying via the payment machine 50. The payment barcode is generated on a per customer basis who pays via the payment machine 50.

In ACT 54, the processor 31 transmits the merchandise-to-be-purchased list 321 extracted by the processing of ACT 52 and the payment barcode generated by the processing of ACT 53, addressed to the store server 10. In response to this transmission, the store server 10 saves the merchandise-to-be-purchased file 131 storing the merchandise-to-be-purchased list 321 and the payment barcode.

In ACT 55, the processor 31 controls the communication interface 35 to output a display command to the information terminal 60 of the payment command transmission source. In response to this control, the communication interface 35 transmits a display command. The display command is wirelessly transmitted from the access point 70 via the network 2 and received by the information terminal 60 of the payment command transmission source. The display command includes the payment barcode.

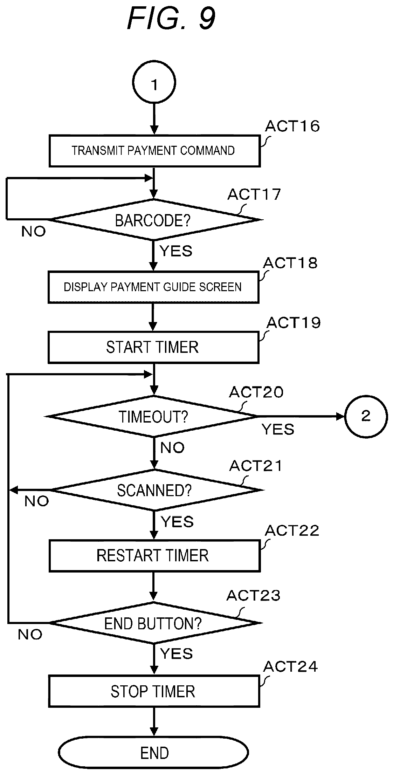

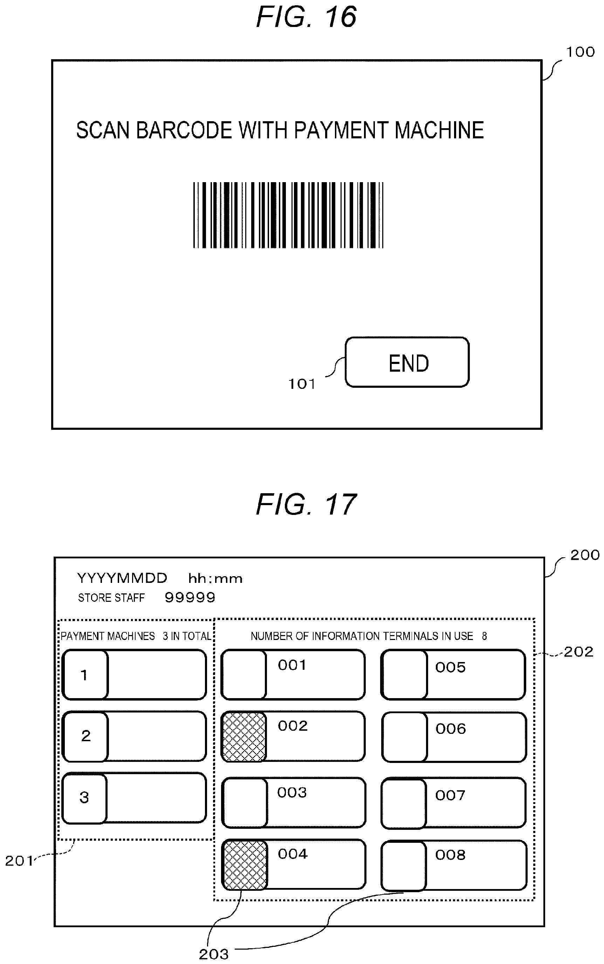

The description goes back to FIG. 9. In ACT 16, the processor 611 of the information terminal 60, after controlling the output of the payment command, receives a display command in ACT 17. If the processor 611 receives a display command in this waiting state, the processor 611 makes a YES determination in ACT 17 and proceeds to ACT 18. In ACT 18, the processor 611 displays a payment guide screen 100 (see FIG. 16) on the touch panel 616.

FIG. 16 is a schematic view showing an example of the payment guide screen 100. As shown in FIG. 16, a payment barcode, a message prompting the customer to scan the payment barcode with the payment machine 50, and an image of an end button 101 are displayed on the payment guide screen 100. The customer scans the payment barcode with the payment machine 50 and then touches the end button 101. Although not illustrated, when the end button 101 is touched, a message screen notifying that the use of the information terminal 60 ends is displayed. The message displayed on the message screen is, for example, "Thank you for using our services." When a predetermined time such as 5 minutes has passed since this message screen is displayed, the information terminal 60 is reset. In this embodiment, that the information terminal 60 is reset means that the next member to use the information terminal 60 can perform a login operation on the information terminal 60. The content of the text data shown in FIG. 16 is simply an example.

The description goes back to FIG. 9. After displaying the payment guide screen 100, the processor 611 starts the timer 614 in ACT 19. In ACT 20, the processor 611 checks whether or not the count value of the timer 614 has passed a predetermined time without having an operation input to the information terminal 60. If the predetermined time has passed, the processor 611 makes a YES determination in ACT 20 and proceeds to ACT 25 in FIG. 10. The processing of ACT 25 will be described later.

If the predetermined time has not passed, the processor 611 makes a NO determination in ACT 20 and proceeds to ACT 21. In ACT 21, the processor 611 checks whether the payment barcode is scanned or not. If the payment barcode is not scanned, the processor 611 makes a NO determination in ACT 21 and returns to ACT 20. On checking the payment guide screen 100, the customer goes to the place where the payment machine 50 is installed, and causes the scanner 518 provided in the payment machine 50 to read the payment barcode.

If the payment barcode is scanned, the processor 611 makes a YES determination in ACT 21 and proceeds to ACT 22. That the payment barcode is scanned means that an operation input to the information terminal 60 is performed. In ACT 22, the processor 611 restarts the timer 614. In this embodiment, the restart is to start the count value of the timer 614 from "0".

In ACT 23, the processor 611 checks whether the end button 101 on the payment guide screen 100 is touched or not. If the end button 101 is not touched, the processor 611 makes a NO determination in ACT 23 and returns to ACT 20.

If the end button 101 is touched, the processor 611 makes a YES determination in ACT 23 and proceeds to ACT 24. That the end button 101 is touched means that an operation input to the information terminal 60 is performed. In ACT 24, the processor 611 stops the timer 614.

In ACT 81 in FIG. 15, the processor 511 of the payment machine 50 waits for a payment barcode to be read. If a payment barcode is read, the processor 511 makes a YES determination in ACT 81 and proceeds to ACT 82.

In ACT 82, the processor 511 inquires of the store server 10 about the merchandise-to-be-purchased file 131 with the payment barcode thus read. In response to this inquiry, the store server 10 extracts the merchandise-to-be-purchased file 131 where the payment barcode which is inquired about is stored, and transmits the merchandise-to-be-purchased file 131 to the payment machine 50. Thus, in ACT 83, the processor 511 waits for receiving the merchandise-to-be-purchased file 131. If the merchandise-to-be-purchased file 131 is received, the processor 511 makes a YES determination in ACT 83 and proceeds to ACT 84.

In ACT 84, the processor 511 executes a payment processing based on the data of the merchandise-to-be-purchased list 321 in the merchandise-to-be-purchased file 131 thus received. The payment processing is an existing known processing and therefore will not be described specifically.

In ACT 85, the processor 511 generates transaction data based on the payment processing. In ACT 86, the processor 511 generates the transaction file 132 where the payment barcode read by the processing of ACT 81, the merchandise-to-be-purchased list 321 in the merchandise-to-be-purchased file 131 received by the processing of ACT 83, and the transaction data generated by the processing of ACT 85 are stored. In ACT 87, the processor 511 transmits the transaction file addressed to the store server 10. In response to this transmission, the store server 10 saves the transaction file 132. The processor 511 then ends the information processing according to the procedure shown in the flowchart of FIG. 15.

As described above, if the predetermined time has passed in ACT 8 in FIG. 8 and ACT 20 in FIG. 9, the processor 611 proceeds to ACT 25 in FIG. 10. In ACT 25, the processor 611 controls the wireless unit 615 to output a confirmation command addressed to the mobile controller 30. In response to this control, the wireless unit 615 wirelessly transmits a confirmation command. The confirmation command is received by the access point 70 and sent to the mobile controller 30 via the network 2. The confirmation command includes the member ID stored in the main memory 612.

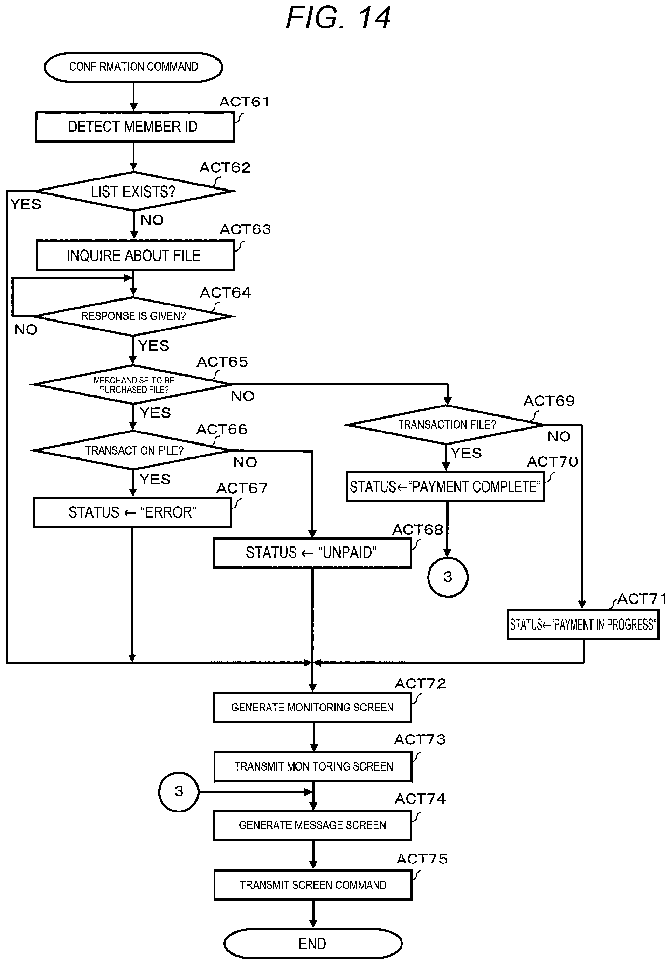

On receiving the confirmation command, the processor 31 of the mobile controller 30 starts a command reception processing according to the procedure shown in the flowchart of FIG. 14. In ACT 61, the processor 31 detects a member ID. In ACT 62, the processor 31 checks whether the merchandise-to-be-purchased list 321 where the detected member ID is described exists or not. In this embodiment, if the merchandise-to-be-purchased list 321 is transmitted to the store server 10 by the processing of ACT 54 in FIG. 13, the merchandise-to-be-purchased list 321 does not exist in the mobile controller 30. The merchandise-to-be-purchased list 321 exists in the mobile controller 30 before the merchandise-to-be-purchased list 321 is transmitted to the store server 10, that is, before the payment button is touched. Therefore, if the merchandise-to-be-purchased list 321 exists in the mobile controller 30, this means that the customer is registering merchandise in the selling area. If the merchandise-to-be-purchased list 321 exists, the processor 31 makes a YES determination in ACT 62 and proceeds to ACT 72. The processing of ACT 72 will be described later.

If the merchandise-to-be-purchased list 321 does not exist, the processor 31 makes a NO determination in ACT 62 and proceeds to ACT 63.

In ACT 63, the processor 31 inquires of the store server 10 about whether a file exists or not, with the member ID detected by the processing of ACT 61. In response to this inquiry, the store server 10 responds to the mobile controller 30 with the presence or absence of the merchandise-to-be-purchased file 131 and the transaction file 132 where the member ID which is inquired about is described. If the merchandise-to-be-purchased list 321 and the payment barcode are transmitted to the store server 10 by the processing of ACT 54 in FIG. 13, the store server 10 saves the merchandise-to-be-purchased file 131. That is, the merchandise-to-be-purchased file 131 exists in the store server 10. Meanwhile, if the transaction file 132 is transmitted to the store server 10 by the processing of ACT 87 in FIG. 15, the store server 10 saves the transaction file 132. That is, the transaction file 132 exists in the store server 10. Therefore, in ACT 64, the processor 31 waits for a response about whether a file exists or not.

If a response to the effect that a file exists is sent from the store server 10, the processor 31 makes a YES determination in ACT 64 and proceeds to ACT 65. In ACT 65, the processor 31 checks whether the file existing in the store server 10 is the merchandise-to-be-purchased file 131 or not.

If the file is the merchandise-to-be-purchased file 131, the processor 31 makes a YES determination in ACT 65 and proceeds to ACT 66. In ACT 66, the processor 31 checks whether or not the transaction file 132 exists, too, as the file existing in the store server 10 (i.e., the store server 10 contains both the merchandise-to-be-purchased file 131 and the transaction file 132).

If the transaction file 132 exists, too, the processor 31 makes a YES determination in ACT 66 and proceeds to ACT 67. In ACT 67, the processor 31 stores that the status is "error" in the main memory 32, based on the state table 331. Subsequently, the processor 31 proceeds to ACT 72.

If the transaction file 132 does not exist, the processor 31 makes a NO determination in ACT 66 and proceeds to ACT 68. In ACT 68, the processor 31 stores that the status is "unpaid" in the main memory 32, based on the state table 331. Subsequently, the processor 31 proceeds to ACT 72.

If the file existing in the store server 10 is not the merchandise-to-be-purchased file 131, the processor 31 makes a NO determination in ACT 65 and proceeds to ACT 69. In ACT 69, the processor 31 checks whether the file existing in the store server 10 is the transaction file 132 or not.

If the file is the transaction file 132, the processor 31 makes a YES determination in ACT 69 and proceeds to ACT 70. In ACT 70, the processor 31 stores that the status is "payment complete" in the main memory 32, based on the state table 331. Subsequently, the processor 31 proceeds to ACT 74. The processing of ACT 74 will be described later.

If the transaction file 132 does not exist, either, the processor 31 makes a NO determination in ACT 69 and proceeds to ACT 71. In ACT 71, the processor 31 stores that the status is "payment in progress" in the main memory 32, based on the state table 331.

In ACT 72, the processor 31 generates a monitoring screen 200 (see FIG. 17), based on the status stored in the main memory 32.

FIG. 17 is a schematic view showing an example of the monitoring screen 200. This example is a case where the number of payment machines 50 is 3 and the number of information terminals 60 in use is 8. As shown in FIG. 17, the monitoring screen 200 has a payment machine state display section 201 on a per payment machine 50 basis and a terminal state display section 202 on a per information terminal 60 basis. The payment machine state display section 201 and the terminal state display section 202 are touch buttons. In the payment machine state display section 201, a payment machine number is displayed. Although not illustrated, when the payment machine state display section 201 is touched, a payment machine state is displayed. For example, whether the payment machine 50 is in the state of "idling" before a payment processing or in the state of "payment in progress" where a payment processing is being performed is displayed. Also, information about the merchandise to be purchased by the customer using the payment machine 50 where a payment processing is being performed can be checked. In the terminal state display section 202, an information terminal number is displayed. Although not illustrated, when the terminal state display section 202 is touched, a terminal state is displayed. For example, whether the information terminal 60 is in the state of "error", "unpaid", "payment in progress" or "payment complete" is displayed. Also, information about the merchandise to be purchased by the customer using the information terminal 60 in the corresponding state can be checked. The terminal state display section 202 also includes an area 203. The area 203 is an area where the state of the information terminal 60 can be identified by color or the like. If the processor 611 has passed a predetermined time without having an operation input to the information terminal 60 and the information terminal 60 is in a payment-incomplete state, that is, having the status of "error", "unpaid" or "payment in progress", the background color of the area 203 is made different. The content of the text data, and the shape, size, arrangement, and number of the display sections, displayed in FIG. 17 are simply an example.

The description returns to FIG. 14. In ACT 73, the processor 31 transmits data of the monitoring screen 200 addressed to the monitoring terminal 40. In response to this transmission, the monitoring terminal 40 displays the monitoring screen 200 on the touch panel thereof. Thus, a store staff member who has checked the area 203 in the monitoring screen 200 displayed on the touch panel of the monitoring terminal 40 searches for the cart C left behind in the selling area, the payment area or the like.

In ACT 74, the processor 31 generates a message screen to be displayed on the information terminal 60, based on the status stored in the main memory 32. For example, if the status is "error", "unpaid" or "payment in progress", the information terminal 60 is in the payment-incomplete state, where the payment processing for the merchandise to be purchased is not complete, and therefore the message is "Store staff is coming soon. Please wait." If the status is "payment complete", the message is "Thank you for using our services." Also, if the status is "payment complete", the information terminal 60 is reset when a predetermined time such as 5 minutes has passed since the message is displayed, as in the case where the end button 101 on the payment guide screen 100 is touched. The message is not limited to the above examples.

In ACT 75, the processor 31 controls the communication interface 35 to output a screen command addressed to the information terminal 60. In response to this control, the communication interface 35 transmits a screen command. The screen command is wirelessly transmitted from the access point 70 via the network 2 and received by the information terminal 60 of the confirmation command transmission source. The screen command includes data of the message screen. The processor 31 then ends the confirmation command reception processing.

The description goes back to FIG. 10. After controlling the output of the confirmation command in ACT 25, the processor 611 of the information terminal 60 waits for a screen command in ACT 26. On receiving a screen command from the mobile controller 30, the processor 611 makes a YES determination in ACT 26 and proceeds to ACT 27. In ACT 27, the processor 611 displays a message screen on the touch panel 616. The processor 611 then ends the information processing according to the procedure shown in the flowcharts of FIGS. 8 to 10.

As is clear from the above description, the mobile controller 30, which is an example of the information processing device, forms an acquisition unit by having the processor 31 execute the processing of ACT 61 in FIG. 14. That is, the mobile controller 30 acquires the identification information identifying the information terminal 60 operated by the user, that is, the customer, to register merchandise to be purchased.

The mobile controller 30 forms a confirmation unit by having the processor 31 execute the processings of ACT 62 to ACT 71 in FIG. 14. That is, if an operation input to the information terminal 60 is not performed within a predetermined time, the mobile controller 30 checks the status of the payment for the merchandise to be purchase registered in correlation with the identification information.

The mobile controller 30 forms an execution unit by having the processor 31 execute the processings of ACT 72 to ACT 75 in FIG. 14. That is, the mobile controller 30 executes the processing corresponding to the status of the payment for the merchandise to be purchased.

In this way, according to this embodiment, if a predetermined time has passed without having an operation input to the information terminal 60, the processing corresponding to the payment status of the customer who is the user of the cart C is executed. Specifically, if the payment status is "payment complete", a message screen is displayed on the information terminal 60 and subsequently the information terminal 60 is reset. If the payment status is "unpaid", "payment in progress" or "error", that is, if the payment is incomplete, a message screen is displayed on the information terminal 60 and the monitoring terminal 40 is notified. Therefore, the store staff searches for the cart C left behind for a predetermined time or longer. If the payment is complete, the store staff need not adjust the information terminal 60 provided on this cart C so that the next member to use the cart C can perform a login operation via the information terminal 60. If the payment is incomplete, the store staff can check the area 203 in the monitoring screen 200 and thus can easily learn the presence of the cart C left behind due to payment fraud. This reduces the time and effort of and the burden on the store staff.

An embodiment of the information processing device, the control program therefor, and the information processing method has been described. However, this embodiment is not limiting.

In the embodiment, a case where a login on the information terminal 60 is performed using a member card is described as an example. However, the login method is not particularly limited. For example, the customer may cause a smartphone possessed by the customer to display a code symbol representing the member code on the display unit thereof, and then cause the scanner 617 to read the code symbol, thus performing a login. In this case, the reader 618 can be omitted from the information terminal 60.

In this embodiment, a case where the information terminal 60 is attached to the cart C is described as an example. The information terminal 60 may not necessarily be attached to the cart C. For example, a smartphone, a tablet terminal or the like owned by the customer may be used as the information terminal 60.

In the embodiment, a case where the member ID is stored in the merchandise-to-be-purchased list 321 is described as an example. However, for example, the terminal ID, which is an identification code of the information terminal 60, may be stored, or both the member ID and the terminal ID may be stored.

In the embodiment, the processor 611 of the information terminal 60 is described as displaying a message screen on the touch panel 616 after receiving a screen command. However, the output is not limited to the display and may be a sound or the like. A lamp may be provided on the information terminal 60 and the lamp may be turned on or made to flash on and off.

The cart POS system 1 according to the embodiment is not limited to the system shown in FIG. 1. For example, the store server 10, the member server 20, and the mobile controller 30 may be formed by one or two servers. Also, for example, the member server 20 may be provided as cloud computing on the internet, instead of being directly connected to the network 2.

In the embodiment, the control program is described as being stored in advance in the main memory 612 or the auxiliary memory device 613 of the information terminal 60. In this respect, the control program transferred separately from the information terminal 60 may be written in a rewritable memory device provided in the information terminal 60 in response to a user operation. The transfer of the control program can be performed by recording the control program in a removable recording medium or by communication via a network. The recording medium may be in any form that can store a program and that can be read by a device, such as a CD-ROM or a memory card.

While some embodiments have been described, these embodiments are presented simply as examples and are not intended to limit the scope of the disclosure. These novel embodiments can be carried out in various other forms and can include various omissions, replacements, and modifications without departing from the scope of the disclosure. These embodiments and the modifications thereof are included in the scope of the disclosure and also included in the scope of the claims and equivalents thereof.

## Claims

1. An information processing device comprising processing circuitry having programmed instructions to:
acquire identification information identifying an information terminal operated by a user to register merchandise that the user intends to purchase;
in response to a determination that an operation input has not been performed at the information terminal for a threshold period of time, confirm a status of a payment for the merchandise, the status being registered in correlation with the identification information; and
provide an output based on the status of the payment for the merchandise.

2. The information processing device of claim 1, wherein providing the output includes providing data indicating the status of the payment for the merchandise to the information terminal.

3. The information processing device of claim 2, wherein providing the output includes providing a command to the information terminal that causes the information terminal to provide a notification to the user indicating the status of the payment for the merchandise.

4. The information processing device of claim 2 or 3, wherein providing the output includes providing a command to the information terminal that resets the information terminal if the status of the payment for the merchandise indicates that the payment is complete.

5. The information processing device of any one of claims 1 to 4, wherein providing the output includes providing data to a monitoring terminal indicating that the payment is incomplete in response to a determination by the information processing device that the payment is incomplete.

6. The information processing device of any one of claims 1 to 5, wherein providing the output includes providing a command to a monitoring terminal that causes a display of the monitoring terminal to indicate the status of the payment for the merchandise.

7. The information processing device of claim 6, wherein the information terminal is a first information terminal, and the processing circuitry has programmed instructions to:
confirm a status of a payment for the merchandise registered using a second information terminal; and
provide a command to the monitoring terminal that causes the display to indicate the status of the payment for the merchandise registered using the second information terminal.

8. The information processing device of any one of claims 1 to 7, wherein confirming the status of the payment includes determining if a memory device contains merchandise-to-be-purchased data including a list of the merchandise that the user intends to purchase.

9. The information processing device of claim 8, wherein the merchandise-to-be-purchased data is generated in response to an input indicating that the user wishes to initiate the payment being received by the information terminal.

10. The information processing device of any one of claims 1 to 9, wherein confirming the status of the payment includes determining if a memory device contains transaction data representing a result of a transaction associated with the merchandise that the user intends to purchase.

11. An information processing method comprising:
acquiring, by a controller, identification information identifying an information terminal operated by a user to register merchandise that the user intends to purchase;
in response to a determination that an operation input has not been performed at the information terminal for a threshold period of time, confirming a status of a payment for the merchandise, the status being registered in correlation with the identification information; and
providing an output based on the status of the payment for the merchandise.

12. The information processing method of claim 11, wherein confirming the status of the payment includes:
determining if a memory device contains merchandise-to-be-purchased data including a list of the merchandise that the user intends to purchase; and
determining if the memory device contains transaction data representing a result of a transaction associated with the merchandise that the user intends to purchase.

13. The information processing method of claim 12, further comprising determining that the user has not initiated the payment in response to a determination that the memory device contains the merchandise-to-be-purchased data but does not contain the transaction data.

14. The information processing method of claim 12 or 13, further comprising determining that the payment is in progress in response to a determination that the memory device contains neither the merchandise-to-be-purchased data nor the transaction data.

15. The information processing method of any one of claims 11 to 14, further comprising determining that the payment is incomplete in response to a determination that the memory device contains the transaction data but does not contain the merchandise-to-be-purchased data.
